# EUROPEAN PATENT SPECIFICATION

(11) **EP 1 422 533 B1**
(45) Date of publication and mention of the grant of the patent: **24.01.2007**
(21) Application number: 04002490.3
(22) Date of filing: 16.08.2001
(51) Int. Cl.: G01S 7/35, G01S 7/40, H03F 1/30

(54) **Radar receiver and radar system**
Radarempfänger und Radarsystem
Récepteur et système radar

(30) Priority: 16.08.2000 US 226160 P
(43) Date of publication of application: 26.05.2004
(62) Divisional of application: 01967994.3
(73) Proprietor: RAYTHEON COMPANY, Waltham, Massachusetts 02451-1449 (US)
(72) Inventor: Hanson, James T., Maynard MA 01754 (US); Woodington, Walter Gordon, Lincoln MA 01773 (US); Delcheccolo, Michael Joseph, Westford MA 01866 (US); Pleva, Joseph S., Londonderry NH 03053 (US); Russell, Mark E., Westford MA 01866 (US); Van Rees, H. Barteld, Needham MA 02492 (US)
(74) Representative: Richardson, Julie Kate

(56) References cited:
- EP-A- 0 398 712
- EP-A- 1 020 989
- US-A- 5 410 745
- US-A- 5 530 447
- US-A- 5 929 802
- US-A- 6 097 240
- DOW G S ET AL: "Monolithic receivers with integrated temperature compensation function" GALLIUM ARSENIDE INTEGRATED CIRCUIT (GAAS IC) SYMPOSIUM, 1991. TECHNICAL DIGEST 1991., 13TH ANNUAL MONTEREY, CA, USA 20-23 OCT. 1991, NEW YORK, NY, USA,IEEE, US, 20 October 1991 (1991-10-20), pages 267-270, XP010053220 ISBN: 0-7803-0196-X

## Description

### FIELD OF THE INVENTION

This invention relates generally to radar systems and more particularly to a radar receiver and radar system having a video amplifier with temperature compensation.

### BACKGROUND OF THE INVENTION

As is known in the art, radar receivers include circuitry for receiving electromagnetic radiation reflected by objects within a field of view of the radar system. Typical functions of a radar receiver include signal amplification at radio frequencies (RF), down-conversion to convert the RF frequency of the received signal to a lower, video frequency, signal filtering, and analog-to-digital conversion to provide a digital signal for further processing, such as by a Digital Signal Processor (DSP), in order to detect an object within the field of view. Typically, one or more RF preamplifiers, or simply amplifiers are provided in the receive signal path prior to (i.e., upstream of) the down-conversion. A video amplifier located downstream of the down-converter introduces additional gain and generally, has a low pass characteristic in order to reduce aliasing. Aliasing is a phenomena that occurs when the frequency of operation of the analog-to-digital converter is less than two times the frequency of the input signal. The result of aliasing is that the converted signal has ambiguous spurious responses of the input signal.

Such a radar receiver suffers from several design challenges. In the case of a bistatic radar system (i.e., a radar system having separate transmit and receive antennas, typically positioned proximate one another), a leakage signal corresponding to a portion of the RF signal emitted from the transmit antenna is coupled to the receive antenna without intercepting an object. Since the sensitivity of the radar system may be limited by the noise accompanying the portion of the transmitted signal which leaks into the receiver, conventionally such a leakage signal is filtered prior to processing the return signals.

A further challenge in designing a radar receiver is to compensate for temperature induced gain variations in the RF amplifier, which can be significant particularly in the case of a gallium arsenide (GaAs) amplifier. One way of compensating for temperature induced gain changes is to control the bias to the RF amplifier and thus its gain with a temperature varying voltage. However, this approach adversely affects the dynamic range of the receiver. Another approach used to compensate for temperature induced gain changes in the RF amplifier is to use a PIN diode attenuator in the RF portion of the receiver, with the gain of the PIN diodes controlled by a temperature sensitive device. However, PIN diodes are relatively expensive and add undesirable complexity to the circuit

US 5 530 447 teaches a method of blind-zone target discrimination and a system for road vehicle radar. US 6 097 240 teaches a temperature controlled attenuator.

### SUMMARY OF THE INVENTION

According to the invention, a radar receiver according to claim 1 is provided.

The attenuator includes a temperature sensitive device, such as a thermistor. This arrangement provides a relatively simple and inexpensive way to compensate for temperature induced gain variations in an RF amplifier. This is because the temperature compensation is implemented in the low video frequency amplifier and thus, can be achieved with a relatively inexpensive thermistor arranged in a simple voltage divider network. By compensating for temperature induced gain variations, the dynamic range over which the analog-to-digital converter must operate is reduced.

In one embodiment, each of the first and second filter stages has a bandpass characteristic generated by high and low pass filters. Attenuation of low frequency signals advantageously reduces leakage signals which can occur in bistatic radar systems. Further, in the illustrative FMCW radar system, low frequency attenuation is used to vary the sensitivity of the radar receiver as a function of frequcny and thus, range in such a way that the amplified radar return is substantially independent of range.

A radar system also described includes a transmit antenna for transmitting a first RF signal, a receive antenna for receiving a second RF signal, and a receiver circuit for processing the second RF signal and including a temperature compensated video amplifier. In one embodiment, the temperature compensated video amplifier includes an attenuator having a temperature sensitive device and being coupled in cascade between first and second filter stages, as described above. Preferably, the attenuator gain varies over a predetermined temperature range by approximately the same amount the gain of an RF amplifier contained in the receiver circuit.

The radar system described further includes an analog-to-digital converter responsive to the output signal of the video amplifier for providing a digital signal, a temperature sensor to provide a signal indicative of the temperature of the receiver, and a digital signal processor. The digital signal processor is responsive to the temperature indicative signal for varying a threshold used to process the digital signal. With this arrangement, a final temperature compensation can be made by the digital signal processor to eliminate any temperature induced gain variations in the RF amplifier which are not compensated by the video amplifier.

The first and second filter stages of the video amplifier may have a bandpass characteristic provided by high and low pass filters. With this arrangement, the video amplifier not only reduces aliasing due to its attenuation of high frequency signals, but also reduces the effects of leakage signals due to its attenuation of low frequency signals. The low frequency attenuation further serves to vary the sensitivity of the radar receiver as a function of frequency and thus, range in such a way that the amplified radar return signal is substantially independent of range.

### BRIEF DESCRIPTION OF THE DRAWINGS

The foregoing features of this invention, as well as the invention itself, may be more fully understood from the following description of the drawings in which:
Figure 1 is a block diagram of a radar system;
Figure 2 is a detailed block diagram of an illustrative receiver of the radar system of Figure 1 including a video amplifier;
Figure 3 a schematic of the video amplifier of Figure 2;
Figure 4 is a curve illustrating the temperature versus gain relationship for the thermistor attenuator circuit of the video amplifier of Figure 3;
Figure 5 is a curve illustrating the temperature versus midband gain relationship for the video amplifier of Figure 3;
Figure 6 is a curve illustrating the frequency versus gain relationship for the video amplifier of Figure 3 at three different temperatures; and
Figure 7 is a block diagram of an automotive Near Object Detection system including the radar system of Figure 1.

### DESCRIPTION OF THE PREFERRED EMBODIMENT

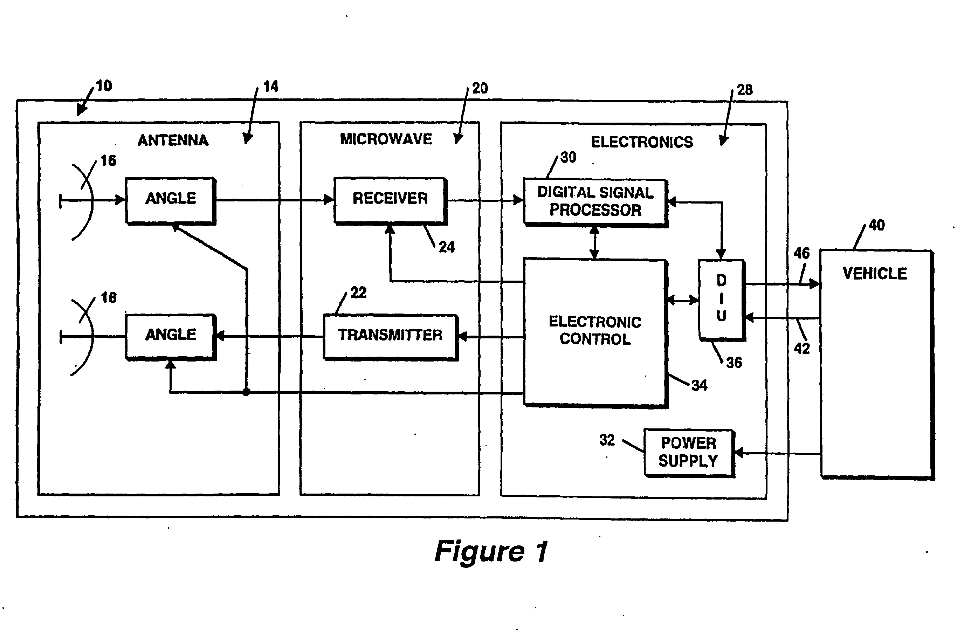

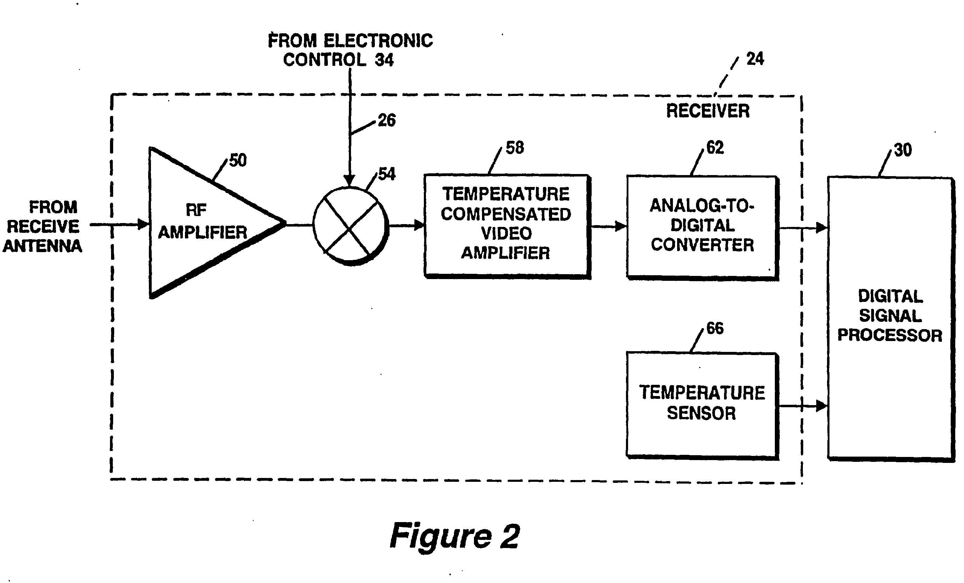

Referring to Figure 1, a radar system 10 includes an antenna portion 14, a microwave portion 20 having both a transmitter 22 and a receiver 24, and an electronic portion 28, consisting of a digital signal processor (DSP) 30, power supplies 32, control circuits 34 and a digital interface unit 36. According to the invention, the receiver 24 includes a temperature compensated video amplifier 58 (Figure 2).

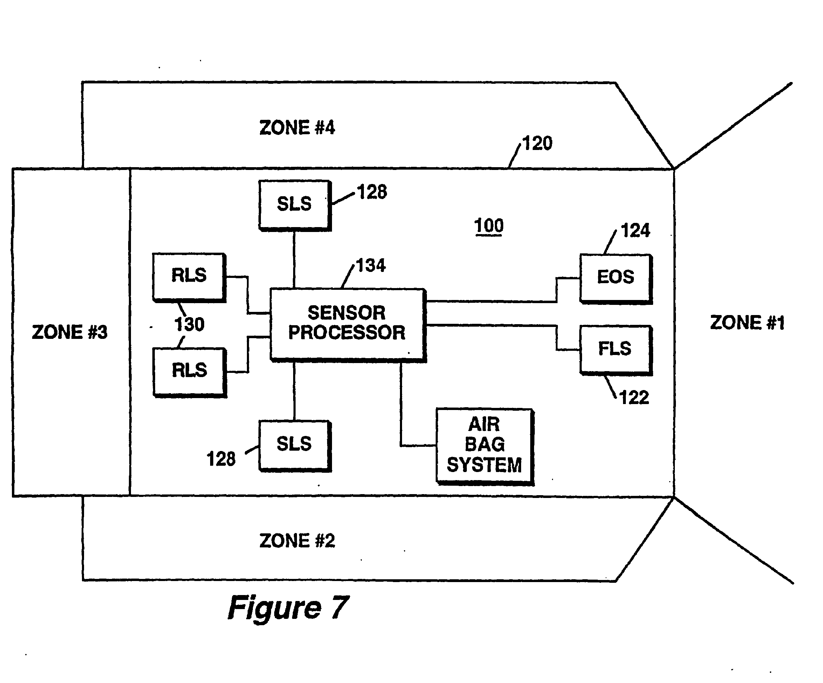

The radar system 10 utilizes radar technology to detect one or more objects, or targets in the field of view of the system and may be used in various applications. In the illustrative example, the radar system 10 is a module of an automotive radar system (Figure 7), such as a Side Object Detection (SOD) module or system, adapted for mounting on an automobile 40 for the purpose of detecting objects, such as other vehicles, trees, signs, pedestrians, etc. As will become apparent to those of ordinary skill in the art, the video amplifier contained in the receiver according to the present invention is suitable for use in radar receivers of many different types of radar systems used in various applications.

The illustrative transmitter 22 operates as a Frequency Modulated Continuous Wave (FMCW) radar, in which the frequency of the transmitted CW signal linearly increases from a first predetermined frequency to a second predetermined frequency. FMCW radar has the advantages of high sensitivity, relatively low peak transmitter power and good range resolution. However, it will be appreciated that other types of transmitters may be used.

Control signals are provided by the vehicle 40 to the radar system 10 of Figure 1 via a control signal bus 42. One illustrative control signal is a disable signal for disabling the radar system 10, for example as may be desirable when the vehicle is stationary. In response to these control signals and reflected RF signals received by the radar system 10, the radar system 10 provides one or more output signals associated with an object within its field of view via an output signal bus 46 to the vehicle. In addition to an output signal indicating the presence of a target, a further output signal may indicate the range of the detected target. The output signals may be coupled to a control unit of the vehicle 40 for various uses, such as blind spot and near object detection.

The antenna assembly 14 includes two antenna, a receive antenna 16 for receiving RF signals and a transmit antenna 18 for transmitting RF signals. The radar 10 may be characterized as a bistatic radar sensor since it includes separate transmit and receive antennas positioned proximate one another. Due to the proximity of the transmit and receive antennas, a portion of the transmitted RF signal will coupled directly to the receive antenna without intercepting an object. This directly coupled signal is referred to as a leakage signal and typically occurs at relatively low frequencies. Leakage signals in the illustrative system have been found to occur at approximately 1KHz. The antennas 16, 18 are multi-lobed and are controlled in parallel as to point in the same direction. Various circuitry for selecting the angle of the respective antennas 16, 18 is suitable, including multi-position transmit and receive antenna switches.

The receiver output is processed by a digital signal processor (DSP) 30 in order to detect an object within the field of view of the radar system, as will be described. The remaining parts of the radar system 10 are standard items, including power supply 32, control circuits 34, including a system clock (crystal controlled oscillator) for frequency stability, and digital interface 36.

It will be appreciated by those of ordinary skill in the art that the particular boundaries between portions of the radar system 10 are somewhat arbitrary and are not fixed. As examples, the receiver 24 may include parts of the electronic control circuits 34 or parts of the receiver, such as an A/D converter (Figure 2), may be provided in the electronics portion 28 of the system. Depending on the selected implementation of the various components, one or more portions of the radar system may be integrated onto one or more hybrid, ASIC, or integrated circuits, modules, or subassemblies.

Referring also to Figure 2, the receiver 24 includes a temperature compensated video amplifier 58 according to the invention. The receiver 24 further includes an RF preamplifier, or simply amplifier 50 responsive to RF signals from the receive antenna 16. The output signal of the RF amplifier 50 is down-converted by a mixer 54 which receives a local oscillator signal 26 from the electronic control 34 (Figure 1). Illustrative frequencies for the RF signals from the amplifier 50 and the local oscillator signal 26 are on the order of 24GHz and the illustrative receiver 24 is a direct conversion, homodyne receiver. However, it will be appreciated by those of ordinary skill in the art that the signal frequencies may be readily varied to suit a particular application and that other receiver topologies may be used.

The resulting video signal provided by the mixer 54 in Figure 2 to the temperature compensated amplifier 58 are between 1 KHz to 40KHz. The video amplifier 58 amplifies and filters the received video signal. Additional functions of the video amplifier include reducing aliasing minimizing leakage signals and providing sensitivity control based on frequency, as will be described.

The receiver 24 further includes an analog-to-digital (A/D) converter, such as a 12 bit converter, which converts the analog output of the video amplifier into a digital signal for further processing. In particular, the signal samples are processed by a fast Fourier transform (FFT) within the DSP 30 in order to determine the content of the return signal within various frequency ranges (i.e., frequency bins). The FFT outputs serve as data for the rest of the signal processor 30 in which one or more algorithms are implemented to detect objects within the field of view. The signal processor 30 may provide various outputs to the vehicle through the digital interface 36 and output bus 46, such as the range and rate of detected objects.

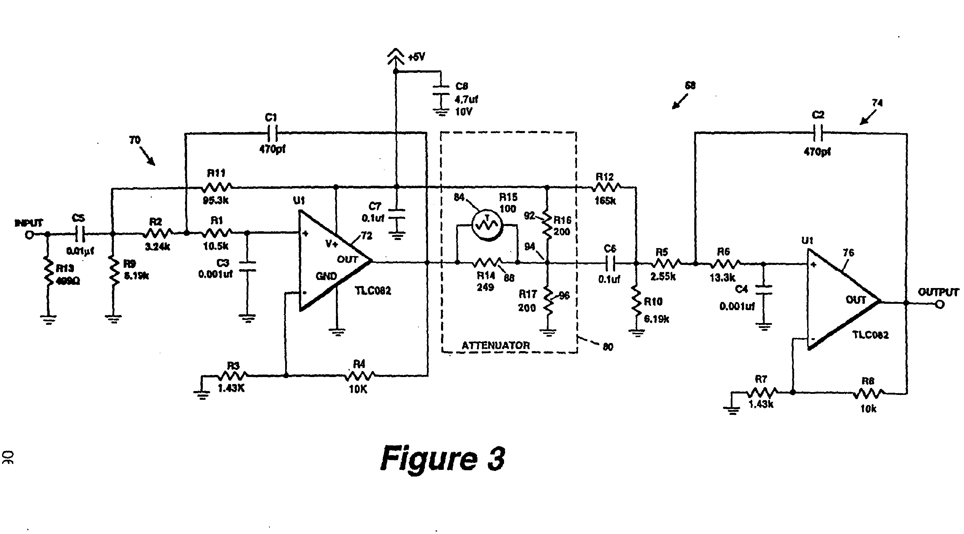

The video amplifier 58 provides a first order temperature compensation to reduce the effect of temperature induced gain variations in the RF amplifier 50. In this way, the dynamic range over which the A/D converter 62 has to operate is reduced. More particularly, RF amplifiers, and particularly those comprised of gallium arsenide (GaAs) transistors, suffer from significant gain variations over temperature. As a typical example, a GaAs amplifier can have a gain variation of 8dB to 9dB over a temperature range of -40°C to +85°C. As will be described further in connection with the video amplifier schematic of Figure 3, the video amplifier is designed to have a thermal characteristic (i.e., gain versus temperature) which is substantially complementary with respect to the thermal characteristic of the RF amplifier 50 so that the thermal characteristic of the receiver, including both the RF amplifier, and the video amplifier is substantially invariant with respect to temperature. For example, if the gain of the RF amplifier 50 decreases by +8dB as the temperature ranges from -40°C to +85°C, then the video amplifier is designed to provide a gain which increases by +8dB over the same temperature range. However, the thermal characteristic of the RF amplifier 50 and the video amplifier 58 generally will not be precisely complementary at every temperature over the range of interest. That is, the two curves may have one or more common points, but different shapes and/or slopes over portions of the temperature range. Therefore, even with the temperature compensated video amplifier 58, there can still exist some temperature induced gain variations of the RF amplifier 50 that are not fully compensated or nulled.

The receiver 24 further includes a temperature sensor 66 shown in Figure 2 which generates a signal indicative of temperature for coupling to the digital signal processor 30 for use in performing a final, fine temperature correction in order to complete the temperature compensation of the RF amplifier 50. In the illustrative embodiment, the temperature sensor 66 is a National Semiconductor LM75; however, other temperature sensors may also be used. During manufacture, the radar system 10 is characterized in order to determine precisely how accurately the temperature compensation performed by the video amplifier 58 compensates for the actual temperature induced gain variation of the RF amplifier 50. The result of this characterization is a certain error in the receiver gain over temperature (i.e., an error characteristic).

In operation, the DSP 30 compares the actual temperature as measured by the temperature sensor 66 to the error characteristic in order to determine the gain error at the measured temperature. The gain error is then used to adjust the threshold used by the FFT to determine whether the signal content within a frequency bin is indicative of the presence of an object within the field of view. As one example, a look-up table may be used to provide an adjusted threshold from the gain error. Since temperature generally changes relatively slowly, the temperature sensor output signal may be sampled and processed by the DSP 30 infrequently.

As will be described, the video amplifier 58 has the additional advantages of reducing aliasing, filtering leakage signals and implementing sensitivity control based on the frequency of radar returns. These advantages are achieved by providing the video amplifier with a bandpass characteristic. Sensitivity frequency control is a technique which causes the radar receiver sensitivity to vary with frequency in such a way that the amplified radar return strength is independent of range. This technique is analogous to the conventional technique of sensitivity time control (STC) used in pulse radars in which the receiver sensitivity is made to vary with time in such a way that the amplified radar return strength is independent of range. By tailoring the low frequency roll off, RF signal returns are weighted according to the range of the intercepted target, so that weak returns (which correspond to higher beat frequencies and distant objects) are weighted greater than strong returns (which correspond to lower beat frequencies and close objects). Further, low frequency attenuation causes leakage signals to be filtered. The high frequency cutoff (i.e., the 3dB point) is selected with knowledge of the sampling rate of the A/D converter 62 in order to reduce aliasing, as will be described. The result of the bandpass filtering provided by the video amplifier is a reduction in the dynamic range over which the A/D converter 62 is required to operate.

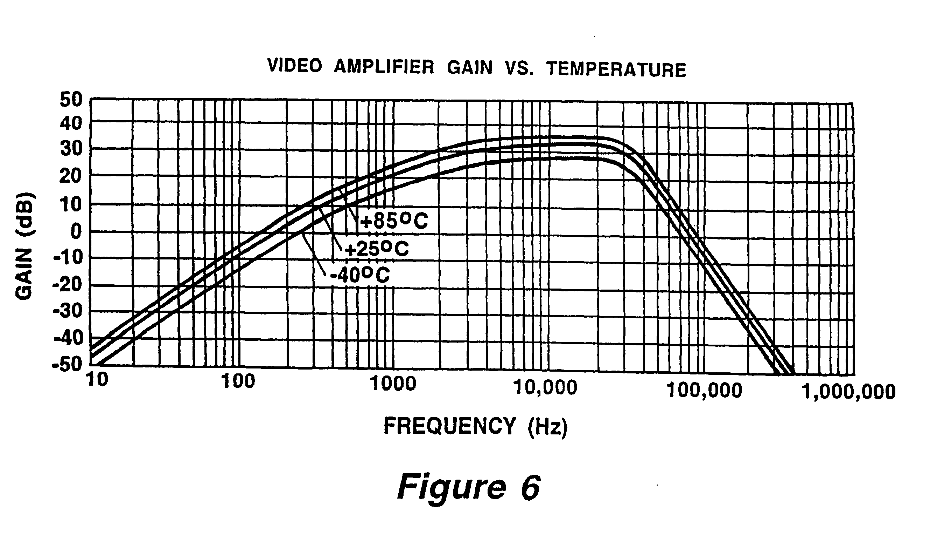

Referring to Figure 3, the temperature compensated video amplifier 58 includes two filter stages 70, 74 coupled in cascade with the temperature compensating attenuator 80. In the preferred embodiment, the attenuator 80 is positioned between the two filter stages 70, 74. Although design considerations such as noise figure would require careful attention, it is possible to position the attenuator before the first filter stage or after the second filter stage. Each of the filter stages 70, 74 two poles of a four pole Butterworth active low pass filter, with the high pass filtering provided by capacitors C5 and C6. Although the filters 70, 74 are used to generate a Butterworth filter response, it will be appreciated by those of ordinary skill in the art that other filter response types may be used, such as Gaussian or Chebyshev. Each filter stage 70, 74 comprises an operational amplifier 72, 76, respectively, and a resistor/capacitor network in a two pole Sallen Key topology, as shown. Again, it will be appreciated that other filter topologies may be used. In the illustrative embodiment, each filter stage 70, 74 provides approximately 18dB of gain and, together, provide a high frequency cutoff of approximately 40KHz for the entire video amplifier, and a low frequency cutoff of approximately 3500Hz which results in a low frequency cutoff of approximately 1KHz for the entire video amplifier (see Figure 6).

The attenuator 80 in the form of a voltage divider includes a temperature sensitive thermistor device 84 in parallel with a resistor 88, with the parallel combination coupled to the interconnection point between series resistors 92 and 96, as shown. As will become apparent to those of ordinary skill in the art, the temperature sensitive, or temperature detecting device 84 may be provided as a thermistor as in the preferred embodiment, a resistive temperature detector (RTD), a thermocouple, a diode or any other device having a resistance that varies in a controlled and defined manner over temperature.

The attenuator 80 is designed to provide a gain versus temperature characteristic which is substantially complementary with respect to the gain versus temperature characteristic of the RF amplifier 50 so that the gain versus temperature characteristic of the entire receiver is substantially invariant with temperature or stated differently, so that the temperature induced gain variation of the RF amplifier 50 is substantially nulled. To this end, during manufacture, the RF amplifier 50 is characterized in order to determine its gain versus temperature characteristic. In the illustrative embodiment, the GaAs RF amplifier 50 has a gain that decreases by approximately 8dB from a temperature of -40°C to a temperature of +85°C.

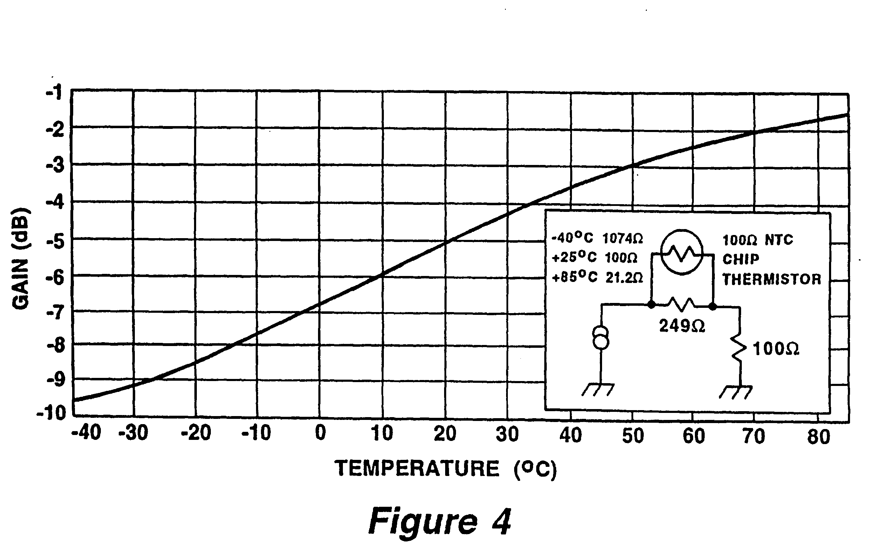

The illustrative attenuator 80 has a gain versus temperature characteristic as shown in Figure 4. In general, the attenuator 80 has a maximum attenuation value at low temperatures and reduced attenuation at higher temperatures in order to compensate the gain variations in the RF amplifier. In particular, the attenuator 80 has a gain of approximately -9.5dB at -40°C, 4.5dB of gain at +25°C, and -1.5dB at +85°C in order to compensate a gain versus temperature characteristic of the RF amplifier 50 which is +9.5dB higher than desired at -40°C, +4.5dB higher than desired at 25°C, and +1.5dB higher than desired at +85°C.

The illustrative thermistor 84 is a negative temperature coefficient Panasonic ERT-JOEA101J device having a resistance of 1074 ohms at -40°C, 100 ohms at +25°C, and 21.2 ohms at +85°C. It will be appreciated that other thermistors having similar characteristics are also suitable. Although the thermistor attenuation is in the right direction (i.e., more attenuation at low temperatures than at high temperatures) to compensate for the RF amplifier temperature induced gain variation, the attenuation by the thermistor alone (coupled in a voltage divider arrangement with an effective resistance of 100 ohms provided by resistors 92 and 96) would be -12.4dB at -40°C,-6dB at +25°C and -1.67dB at +85°C, which would result in too large an attenuation range. As a result, parallel resistor 88 is used to adjust the attenuation range of the thermistor and improves the linearity of the gain versus temperature characteristic of the attenuator.

The value of the resistor 88 is selected using an iterative process in order to substantially complement the RF amplifier thermal characteristic curve. In the illustrative embodiment, resistor 88 has a value of 249 ohms. With this arrangement, at -40°C, the equivalent resistance of the thermistor 84 and resistor 88 is 202 ohms resulting in an attenuation ratio of 0.331, or -9.6dB. At +25°C, the parallel thermistor 82 and resistor 88 provide an equivalent resistance of 71.35 ohms and the voltage divider network provides an attenuation ratio of .584, or -4.7dB. Further, at +85°C, the parallel thermistor 82 and resistor 88 provide an equivalent resistance of 19.5 ohms and the voltage divider network provides an attenuation ratio of .836, or -1.6dB. The attenuator gain versus temperature thermal characteristic is shown in Figure 4.

It will be appreciated by those of ordinary skill in the art that various changes can be made to the attenuator 80 without departing from the spirit of the invention. For example, the attenuator may be designed using a positive temperature coefficient device and the topology of the attenuator elements may be modified from the illustrated voltage divider arrangement, while still providing the necessary attenuation in order to substantially complement the gain versus temperature characteristic of the RF amplifier.

The values of resistors 92 and 96 are selected so that the output of the operational amplifier 72 is biased to have a nominal value of Vcc/2, or 2.5 volts, which is equal to the nominal voltage at the output node 94 of the attenuator. With this arrangement, only AC current flows through the thermistor 84, thereby preventing heating from DC current which would cause the resistance of the thermistor to change. The operational amplifier 76 is biased to provide a nominal output voltage on the order of 1.5 volts which corresponds to the midpoint of the voltage range of the A/D converter 62 in Figure 2.

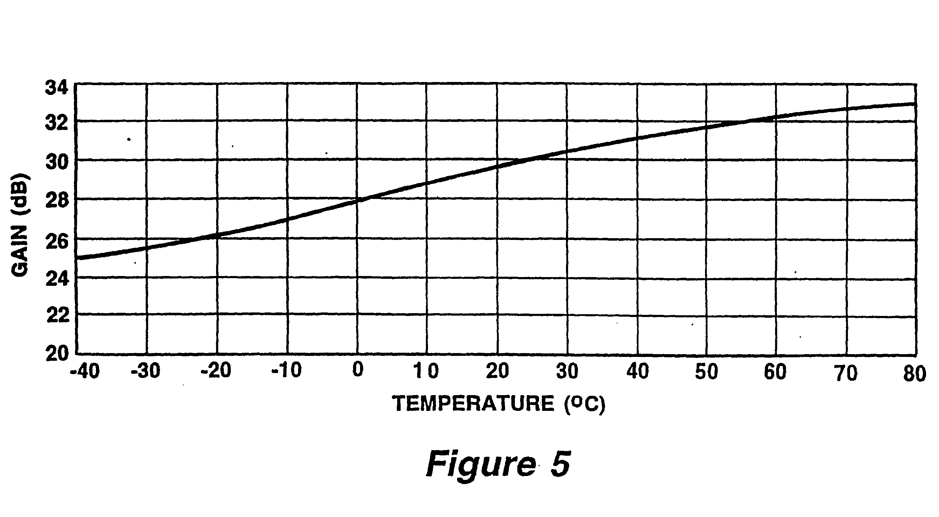

Referring to Figure 5, the gain versus temperature characteristic of the entire video amplifier 58 is shown. As is apparent, the video amplifier provides approximately 30dB of gain at 25°C and varies by the desired 9dB over the illustrated temperature range.

Referring to Figure 6, the frequency response of the video amplifier 58 of Figure 3 is shown. As noted above, the passband cutoff frequencies are approximately 3.5KHz and 40KHz since these frequencies correspond to frequencies of radar returns from objects within a range of interest (i.e., from approximately 1 - 30 meters).

The high frequency cutoff is selected to reduce aliasing. In the illustrative embodiment, the A/D converter 62 samples at a rate on the order of 230KHz - 250KHz. The 40KHz high frequency cutoff point is sufficient to reduce the effects of aliasing since signals having frequencies of 115KHz or greater are significantly attenuated, thereby ensuring that the sampling rate is at least two times the frequency of the highest frequency sampled signal.

The attenuation of low frequency signals serves to filter leakage signals and implement sensitivity control based on frequency and therefore range. Leakage signals in the illustrative radar system 10 have been found to have a frequency on the order of 1KHz. Various factors determine the frequency of the leakage signals, including but not limited to the time delay of the leakage signal relative to the mixer local oscillator signal. The low frequency cutoff of 3.5KHz causes such leakage signals to be attenuated. Further, this attenuation of low frequency signals provides sensitivity frequency control since higher frequency returns which correspond to weaker return signals from distant objects are weighted more heavily than lower frequency returns which correspond to stronger return signals from close objects. In the illustrative radar system 10, objects located on the order of one meter from the radar system will provide a return frequency on the order of 1KHz and such returns will be attenuated by a reduction in gain on the order of 10dB. Whereas, an object of the same cross-section located ten meters from the radar system will provide a return frequency on the order of 12KHz. With this signal attenuation, the disparity between the amplitude of the two returns is reduced, thereby reducing the dynamic range over which the A/D converter is required to operate.

It will be appreciated by those of ordinary skill in the art that the particular high pass cutoff and slope can be readily varied by changing one or more component values in the filter stages 70, 74 in order to provide a desired characteristic. In general, the roll-off characteristic is selected to attenuate leakage signals and to implement sensitivity frequency control by adding more gain to returns from distant objects than to returns from close objects, with the demarcation between distant objects and close objects being a parameter particular to the application of the radar system.

Referring to Figure 7, an illustrative application for the radar system 10 of Figure 1 is shown in the form of an automotive Near Object Detection (NOD) system 100. The NOD system 100 is disposed on a vehicle 120 which may be provided for example, as an automotive vehicle such as car, motorcycle, or truck, or a marine vehicle such as a boat or an underwater surface vehicle or as an agricultural vehicle such as a harvester. In this particular embodiment, the NOD system 100 includes a forward-looking sensor (FLS) system 122, an electro-optic sensor (EOS) system 124, a plurality of side-looking sensor (SLS) systems 128 and a plurality of rear-looking sensor (RLS) systems 130.

Each of the SLS systems 128 may be referred to as a side object detection (SOD) system and may take the form of the radar system 10 shown in Figure 1 and including the receiver 24 of Figure 2 which, in turn, includes the video amplifier of Figure 3. Further, parts or all of the radar system 10 of Figures 1-3 may be used to implement the other sensor systems such as the RLS systems. As one example, the video amplifier 58 of the present invention may be incorporated into one or more of the FLS, EOS, SLS, and RLS sensor systems of the NOD system 100.

Each of the FLS, EOS, SLS, and RLS systems is coupled to a sensor processor 134. In this particular embodiment, the sensor processor 134 is shown as a central processor to which each of the FLS, EOS, SLS, and RLS systems is coupled via a bus or other means. It should be appreciated that in an alternate embodiment, one or more of the FLS, EOS, SLS, and RLS systems may include its own processors to perform the processing described below, such as the DSP 30 of Figure 1. In this case, the NOD system 100 would be provided as a distributed processor system.

Regardless of whether the NOD system 100 includes a single or multiple processors, the information collected by each of the sensor systems is shared and the processor (or processors in the case of a distributed system) implements a decision or rule tree. The NOD system 100 may be used for a number of functions including but not limited to blind spot detection, lane change detection, pre-arming of vehicle air bags and to perform a lane stay function. For example, the sensor processor 134 may be coupled to the airbag system of the vehicle. In response to signals from one or more of the FLS, EOS, SLS, and RLS systems, the sensor processor may determine that it is appropriate to "pre-arm" the airbag of the vehicle. Other examples are also possible.

The EOS system includes an optical or IR sensor or any other sensor which provides good or high resolution in the azimuth direction of the sensor. The pair of RLS sensors can utilize a triangulation scheme to detect objects in the rear portion of the vehicle. The FLS sensor is described in U.S. Patent No. 5,929,802 entitled AUTOMOTIVE FORWARD LOOKING SENSOR APPLICATION issued on July 27, 1999, assigned to the assignee of the present invention and incorporated herein by reference. It should be appreciated that each of the SLS and RLS sensors may be provided having the same antenna system.

Each of the sensor systems is disposed on the vehicle such that a plurality of coverage zones exist around the vehicle. Thus, the vehicle is enclosed in a cocoon-like web of sensor zones. With the particular configuration shown in Figure 7, four coverage zones are used. Each of the coverage zones utilizes RF detection systems. The RF detection system utilizes an antenna system which provides multiple beams in each of the coverage zones. In this manner, the particular direction from which another object approaches the vehicle or vice-versa can be found.

It should be appreciated that the SLS, RLS, and the FLS systems may be removably deployed on the vehicle. That is, in some embodiments the SLS, RLS, and FLS sensors may be disposed external to the body of the vehicle (i.e. on an exposed surface of the vehicle body), while in other systems the SLS, RLS, and FLS systems may be embedded into bumpers or other portions of vehicle (e.g. doors, panels, quarter panels, vehicle front ends, and vehicle rear ends). It is also possible to provide a system which is both mounted inside the vehicle (e.g., in the bumper or other location) and which is also removable.

Having described the preferred embodiments of the invention, it will now become apparent to one of ordinary skill in the art that other embodiments incorporating their concepts may be used. For example, it will be appreciated by those of ordinary skill in the art that receiver topologies other than the illustrated direct conversion, homodyne receiver of Figure 2 may benefit from the described video amplifier. It will also be appreciated that the video amplifier of the present invention can be designed to compensate for temperature induced gain variations of circuit elements or groups of elements in addition to, or instead of the RF amplifier 50. For example, the attenuator 80 can be designed to compensate for temperature induced gain variations of the entire receiver by characterizing the thermal response of the receiver and designing the attenuator to have a thermal characteristic curve with one or more points complementary with respect to one or more points on the thermal characteristic curve of the receiver.

It is felt therefore that these embodiments should not be limited to disclosed embodiments but rather should be limited only by the scope of the appended claims.

## Claims

1. A radar receiver (24) comprising:
an RF amplifier (50) having an input terminal adapted to receive a RF signal and an output terminal at which an amplified RF signal is provided, the RF amplifier having a gain that varies by a first predetermined amount with temperature
a down-converter (54) having an input terminal coupled to said output terminal of said RF amplifier (50) and an output terminal at which a lower frequency signal is provided; and
a video amplifier (58);
**characterised in that** the video amplifier (58) comprises:
a first filter stage (70) having an input terminal coupled to said output terminal of said down-converter (54) and an output terminal;
a temperature compensating attenuator (80), coupled to the output terminal of the first filter stage (70), having a gain which varies by a second
predetermined amount with temperature, the first and second predetermined amounts being substantially complementary, and
a second filter stage (74) having an input terminal coupled to the temperature compensating attenuator (80) and an output terminal at which said filtered signal is provided; and
wherein the temperature compensating attenuator (80) comprises a thermistor and the output of the first filter stage (70) is biased to have a nominal voltage equal to the nominal voltage at the output of the temperature compensating attenuator (80).

2. A radar receiver according to claim 1, wherein the RF amplifier (50) is comprised of GaAs transistors.

3. A radar receiver according to claim 1, wherein the attenuator further comprises at least one resistor coupled to the thermistor to form a voltage divider.

4. A radar receiver according to claim 1, wherein each of the first filter stage (70) and the second filter stage (74) has a bandpass characteristic.

5. A radar receiver according to claim 4, wherein the bandpass characteristic has a low frequency cutoff selected to attenuate a leakage signal.

6. A radar receiver according to claim 4, wherein the bandpass characteristic has a low frequency cutoff selected to attenuate a received RF signal reflected by an object located more than a predetermined distance from the RF receiver.

## Patentansprüche

1. Radarempfänger (24), welcher folgendes enthält:
einen HF-Verstärker (50) mit einem Eingangsanschluss, der für den Empfang eines Hochfrequenzsignales ausgebildet ist, und einem Ausgangsanschluss, an welchem ein verstärktes Hochfrequenzsignal abgegeben wird, wobei der Hochfrequenzverstärker einen Verstärkungsgewinn hat, der sich in Abhängigkeit von der Temperatur in einem ersten vorbestimmten Maße ändert;
einen Abwärtsumsetzer (54) mit einem Eingangsanschluss, der mit dem genannten Ausgangsanschluss des Hochfrequenzverstärkers (50) gekoppelt ist, und mit einem Ausgangsanschluss, an welchem ein niedrigerfrequentes Signal abgegeben wird; und
einen Videoverstärker (58);
**dadurch gekennzeichnet, dass** der Videoverstärker (58) folgendes enthält:
eine erste Filterstufe (70) mit einem Eingangsanschluss, der mit dem genannten Ausgangsanschluss des Abwärtsumsetzers (54) gekoppelt ist, und einem Ausgangsanschluss;
eine temperaturkompensierende Dämpfungseinrichtung (80), welche mit dem Ausgangsanschluss der ersten Filterstufe (70) gekoppelt ist, welche ferner einen Verstärkungsgewinn hat, der sich mit einem zweiten vorbestimmten Betrag abhängig von der Temperatur ändert, wobei der erste und der zweite vorbestimmte Betrag im wesentlichen komplementär zueinander sind, und eine zweite Filterstufe (74), mit einem Eingangsanschluss, der mit der temperaturkompensierenden Dämpfungseinrichtung (80) gekoppelt ist, und einem Ausgangsanschluss, an welchem das gefilterte Signal abgegeben wird; und
wobei die temperaturkompensierende Dämpfungseinrichtung (80) einen Thermistor enthält und der Ausgang der ersten Filterstufe (70) so vorgespannt ist, dass er eine Nominalspannung gleich der Nominalspannung an dem Ausgang der temperaturkompensierenden Dämpfungseinrichtung (80) hat.

2. Radarempfänger nach Anspruch 1, bei welchem der Hochfrequenzverstärker (50) aus GaAs-Transistoren gebildet ist.

3. Radarempfänger nach Anspruch 1, bei welchem die Dämpfungseinrichtung weiter mindestens einen Widerstand aufweist, der mit dem Thermistor gekoppelt ist, um einen Spannungsteiler zu bilden.

4. Radarempfänger nach Anspruch 1, bei welchem sowohl die erste Filterstufe (70) als auch die zweite Filterstufe (74) Bandpasscharakteristik haben.

5. Radarempfänger nach Anspruch 4, bei welchem die Bandpasscharakteristik eine untere Grenzfrequenz hat, welche zur Abdämpfung eines Lecksignales gewählt ist.

6. Radarempfänger nach Anspruch 4, bei welchem die Bandpasscharakteristik eine untere Grenzfrequenz hat, welche so gewählt ist, dass ein empfangenes Hochfrequenzsignal abgedämpft wird, das durch ein Objekt reflektiert wird, das mehr als ein vorbestimmter Abstand von dem Hochfrequenzempfänger entfernt ist.

## Revendications

1. Récepteur radar (24) comprenant :
un amplificateur RF (50) ayant une borne d'entrée adaptée pour recevoir un signal RF et une borne de sortie à laquelle un signal RF amplifié est fourni, l'amplificateur RF ayant un gain qui varie par une première quantité prédéterminée avec la température,
un convertisseur abaisseur (54) ayant une borne d'entrée couplée à ladite borne de sortie dudit amplificateur RF (50) et une borne de sortie à laquelle un signal de fréquence inférieure est fourni ; et
un amplificateur vidéo (58) ;
**caractérisé en ce que** l'amplificateur vidéo (58) comprend :
un premier étage de filtre (70) ayant une borne d'entrée couplée à ladite borne de sortie dudit convertisseur abaisseur (54) et une borne de sortie ;
un atténuateur de compensation de température (80), couplé à la borne de sortie du premier étage de filtre (70), ayant un gain qui varie par une seconde quantité prédéterminée avec la température, les première et seconde quantités prédéterminées étant essentiellement complémentaires, et
un second étage de filtre (74) ayant une borne d'entrée couplée à l'atténuateur de compensation de température (80) et une borne de sortie à laquelle ledit signal filtré est fourni ; et
dans lequel l'atténuateur de compensation de température (80) comprend une thermistance et la sortie du premier étage de filtre (70) est polarisée pour avoir une tension nominale égale à la tension nominale à la sortie de l'atténuateur de compensation de température (80).

2. Récepteur radar selon la revendication 1, dans lequel l'amplificateur RF (50) est composé de transistors GaAs.

3. Récepteur radar selon la revendication 1, dans lequel l'atténuateur comprend en outre au moins une résistance couplée à la thermistance afin de former un diviseur de tension.

4. Récepteur radar selon la revendication 1, dans lequel chacun du premier étage de filtre (70) et du second étage de filtre (74) a une caractéristique passe-bande.

5. Récepteur radar selon la revendication 4, dans lequel la caractéristique passe-bande a une coupure de fréquence basse sélectionnée pour atténuer un signal de fuite.

6. Récepteur radar selon la revendication 4, dans lequel la caractéristique passe-bande a une coupure de fréquence basse sélectionnée pour atténuer un signal RF reçu réfléchi par un objet espacé par plus d'une distance prédéterminée du récepteur RF.
